# EUROPEAN PATENT APPLICATION

(11) **EP 4 582 594 A1**
(43) Date of publication of application: **09.07.2025**
(21) Application number: 23860942.4
(22) Date of filing: 01.09.2023
(51) Int. Cl.: C25B 9/40, C25B 9/19, C25B 15/021, C25B 1/04, C25B 13/08

(54) **ALKALINE WATER ELECTROLYSIS DEVICE COMPRISING METAL PARTICLE FLUIDIC ELECTRODE**

(30) Priority: 02.09.2022 KR 20220111699
(71) Applicant: IUCF-HYU (Industry-University Cooperation Foundation Hanyang University), Seoul 04763 (KR)
(72) Inventor: KWAK, Rhokyun, Seoul 06629 (KR); LIM, Jun Beom, Seoul 04762 (KR); KIM, Jeong Hwan, Seoul 04762 (KR)
(74) Representative: dompatent von Kreisler Selting Werner - Partnerschaft von Patent- und Rechtsanwälten mbB
(86) International application number: PCT/KR2023/013070
(87) International publication number: WO 2024/049267

(57) **Abstract**

The present invention discloses a water electrolysis device including a metal particle fluidic electrode. The water electrolysis device of the present invention includes a cathode; a first fluid channel formed on the cathode; a cation exchange membrane (CEM) formed on the first fluid channel; a second fluid channel formed on the cation exchange membrane; and an anode formed on the second fluid channel, wherein the second fluid channel includes metal particles and is used as a metal particle fluidic electrode.

## Description

### [Cross-Reference to Related Application]

This application is a National Stage Entry of PCT International Application No. PCT/KR2023/013070, which was filed on September 1, 2023, and claims priority to Korean Patent Application No. 10-2022-0111699, filed on September 2, 2022, in the Korean Intellectual Property Office, the disclosure of which is incorporated herein by reference.

### [Technical Field]

The present invention relates to an alkaline water electrolysis device including a metal particle fluidic electrode, and more particularly, to an ultra-low-power alkaline water electrolysis device including a metal particle fluidic electrode that uses a metal oxidation reaction to induce oxidation of metal into metal ions in a fluidized bed containing metal particles at an anode and to produce hydrogen gas by causing a water decomposition reaction at a cathode.

### [Background Art]

The oxygen evolution reaction (OER) that occurs at the anode of solid polymer water electrolysis involves four electrons, so a high overvoltage (overpotential) is applied when voltage is applied. The expensive catalysts (iridium/platinum) used due to the strong acidity of overvoltage and solid polyelectrolytes have the disadvantages of high installation costs and poor durability.

Due to these shortcomings, solid polymer water electrolysis is still in the technological development stage, and alkaline water electrolysis is the only commercialized water electrolysis technology. However, even this alkaline water electrolysis is about three times more expensive than hydrogen production using fossil fuels, and this difference cannot be overcome by simply improving the efficiency of electrolytic cells.

Commercial water electrolysis has a structure in which hydrogen and oxygen are produced simultaneously. The cell configuration, which minimizes the distance between a positive electrode and an ion exchange membrane to reduce resistance, causes the mixing of hydrogen and oxygen, and the resulting mixed gas easily reaches the flammability limit, increasing the risk of explosion. Accordingly, existing water electrolysis technologies have always had safety issues, and have the disadvantage of requiring additional processes such as the necessity of a separation membrane to prevent mixing of hydrogen and oxygen or the need to control the pressure of the hydrogen and oxygen generation channel.

Even in the case of separation-type water electrolysis that mitigates the risk of oxygen-hydrogen mixture explosion, the oxygen generation reaction is not eliminated, but rather oxygen is separated, and oxygen, which is a risk factor for explosion, is ultimately generated, so the possibility of explosion cannot be completely ruled out. In addition, although there is a cost benefit in removing the ion exchange membrane from the process in the separation-type water electrolysis, a process called redox mediator is added. The above method is a water electrolysis method that does not achieve cost recovery through additional products, which is a method that can yield great benefits in terms of cost.

### [Disclosure]

### [Technical Problem]

Therefore, the present invention has been made in view of the above problems, and it is one object of the present invention to provide an ultra-low-power alkaline water electrolysis device including a metal particle fluidic electrode that uses a metal oxidation reaction to induce oxidation of metal into metal ions in a second fluid channel using a metal particle fluidic electrode containing metal particles, produce hydrogen gas by causing a water decomposition reaction in a first fluid channel, and produce a product of zinc hydroxide or/and zinc oxide particles (e.g., zinc hydroxide or/and zinc oxide nanoparticles).

It is another object of the present invention to provide an alkaline water electrolysis device including a metal particle fluidic electrode that may secure cost advantages in line with the growing zinc oxide market through high value-added zinc oxide synthesized as a process progresses, not limited to simply improving the performance/energy efficiency of a water electrolysis device.

### [Technical Solution]

In accordance with one aspect of the present invention, provided is an alkaline water electrolysis device including a cathode; a first fluid channel formed on the cathode; a cation exchange membrane (CEM) formed on the first fluid channel; a second fluid channel formed on the cation exchange membrane; and an anode formed on the second fluid channel, wherein the second fluid channel includes metal particles and is used as a metal particle fluidic electrode.

When a voltage is applied perpendicularly to the cation exchange membrane, in the second fluid channel, the metal particles may be oxidized to generate metal ions, and at the same time, a potential difference of the alkaline water electrolysis device may be controlled using a standard reduction potential of the metal particles.

The metal ions generated in the second fluid channel may move to the first fluid channel along a direction of an electric field.

In the first fluid channel, water may be decomposed into hydrogen and hydroxyl ions, and the generated hydroxyl ions may react with the metal ions to produce at least one of a metal hydroxide and a metal oxide.

The alkaline water electrolysis device may convert the metal hydroxide into the metal oxide within the first fluid channel by controlling operating temperature.

The operating temperature may be 20 °C to 100 °C.

The metal particles may include at least one of zinc (Zn), lead (Pb), cadmium (Cd), iron (Fe), magnesium (Mg), and aluminum (Al), without being limited thereto.

The alkaline water electrolysis device may further include a cationic polyelectrolyte layer at an interface between the cathode and the first fluid channel.

In accordance with another aspect of the present invention, provided is an alkaline water electrolysis device having a zero-gap including a first fluid channel; a cathode formed on the first fluid channel; a cation exchange membrane formed on the cathode; an anode formed on the cation exchange membrane; and a second fluid channel formed on the anode, wherein the second fluid channel includes metal particles and is used as a metal particle fluidic electrode.

In accordance with yet another aspect of the present invention, provided is an alkaline water electrolysis device including a cathode; a first fluid channel formed on the cathode; an anion exchange membrane (AEM) formed on the first fluid channel; a second fluid channel formed on the anion exchange membrane; and an anode formed on the second fluid channel, wherein the second fluid channel includes metal particles and is used as a metal particle fluidic electrode.

When a voltage is applied perpendicularly to the anion exchange membrane, in the second fluid channel, the metal particles may be oxidized to generate metal ions, and at the same time, a potential difference of the alkaline water electrolysis device may be controlled using a standard reduction potential of the metal particles.

In the first fluid channel, water may be decomposed into hydrogen and hydroxyl ions, and the generated hydroxyl ions may move to the second fluid channel along a direction of an electric field.

In the second fluid channel, the hydroxyl ions may react with the metal ions to produce at least one of a metal hydroxide and a metal oxide.

The alkaline water electrolysis device may convert the metal hydroxide into the metal oxide within the second fluid channel by controlling operating temperature.

The operating temperature may be 20 °C to 100 °C.

The alkaline water electrolysis device may further include an anionic polyelectrolyte layer at an interface between the second fluid channel and the anode.

### [Advantageous effects]

According to embodiments of the present invention, the present invention can provide an ultra-low-power alkaline water electrolysis device including a metal particle fluidic electrode that can induce oxidation of metal into metal ions in a second fluid channel using a metal particle fluidic electrode containing metal particles, produce hydrogen gas by causing a water decomposition reaction in a first fluid channel, and produce a product of zinc hydroxide or/and zinc oxide particles (e.g., zinc hydroxide or/and zinc oxide nanoparticles).

According to embodiments of the present invention, the present invention can provide an alkaline water electrolysis device including a metal particle fluidic electrode that can secure cost advantages in line with the growing zinc oxide market through high value-added zinc oxide synthesized as a process progresses, not limited to simply improving the performance/energy efficiency of a water electrolysis device.

In addition, according to embodiments of the present invention, an ultra-low-power alkaline water electrolysis device using oxidation of metal particles can be used not only for water electrolysis but also for fuel cells to improve performance and increase energy efficiency, thereby responding to the increasing demand for hydrogen.

### [Description of Drawings]

FIG. 1 is a schematic diagram illustrating an alkaline water electrolysis device according to one embodiment of the present invention, and FIG. 2 is a schematic diagram illustrating an alkaline water electrolysis device including a cationic polyelectrolyte layer according to one embodiment of the present invention.
FIG. 3 is a schematic diagram illustrating an alkaline water electrolysis device having a zero-gap structure according to an embodiment of the present invention.
FIG. 4 is a schematic diagram illustrating an alkaline water electrolysis device according to another embodiment of the present invention.
FIG. 5 is a microscope image illustrating an alkaline water electrolysis device according to an embodiment of the present invention, and FIG. 6 is a graph showing the results of measuring the open circuit voltage of an alkaline water electrolysis device according to an embodiment of the present invention.
FIG. 7 is a microscope image of an alkaline water electrolysis device including a cationic polyelectrolyte layer according to an embodiment of the present invention, and FIG. 8 is a graph showing the results of measuring the open circuit voltage of an alkaline water electrolysis device including a cationic polyelectrolyte layer according to an embodiment of the present invention.
FIG. 9 is a microscope image of a first fluid channel including a cationic polyelectrolyte layer in an alkaline water electrolysis device including a cationic polyelectrolyte layer according to one embodiment of the present invention.
FIG. 10 is a microscope image of an alkaline water electrolysis device having a zero-gap structure according to an embodiment of the present invention.

### [Best Mode]

The present invention will now be described more fully with reference to the accompanying drawings and contents disclosed in the drawings. However, the present invention should not be construed as limited to the exemplary embodiments described herein.

The terms used in the present specification are used to explain a specific exemplary embodiment and not to limit the present inventive concept. Thus, the expression of singularity in the present specification includes the expression of plurality unless clearly specified otherwise in context. It will be further understood that the terms "comprise" and/or "comprising", when used in this specification, specify the presence of stated components, steps, operations, and/or elements, but do not preclude the presence or addition of one or more other components, steps, operations, and/or elements thereof.

It should not be understood that arbitrary aspects or designs disclosed in "embodiments", "examples", "aspects", etc. used in the specification are more satisfactory or advantageous than other aspects or designs.

In addition, the expression "or" means "inclusive or" rather than "exclusive or". That is, unless mentioned otherwise or clearly inferred from context, the expression "x uses a or b" means any one of natural inclusive permutations.

In addition, as used in the description of the disclosure and the appended claims, the singular form "a" or "an" is intended to include the plural forms as well, unless context clearly indicates otherwise.

Although terms used in the specification are selected from terms generally used in related technical fields, other terms may be used according to technical development and/or due to change, practices, priorities of technicians, etc. Therefore, it should not be understood that terms used below limit the technical spirit of the present invention, and it should be understood that the terms are exemplified to describe embodiments of the present invention.

Also, some of the terms used herein may be arbitrarily chosen by the present applicant. In this case, these terms are defined in detail below. Accordingly, the specific terms used herein should be understood based on the unique meanings thereof and the whole context of the present invention.

Meanwhile, terms such as "first" and "second" are used herein merely to describe a variety of constituent elements, but the constituent elements are not limited by the terms. The terms are used only for the purpose of distinguishing one constituent element from another constituent element.

In addition, when an element such as a layer, a film, a region, and a constituent is referred to as being "on" another element, the element can be directly on another element or an intervening element can be present.

Unless defined otherwise, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present invention, and will not be interpreted in an idealized or overly formal sense unless expressly so defined herein.

In addition, in the following description of the present invention, a detailed description of known functions and configurations incorporated herein will be omitted when it may make the subject matter of the present invention unclear. The terms used in the specification are defined in consideration of functions used in the present invention, and can be changed according to the intent or conventionally used methods of clients, operators, and users. Accordingly, definitions of the terms should be understood on the basis of the entire description of the present specification.

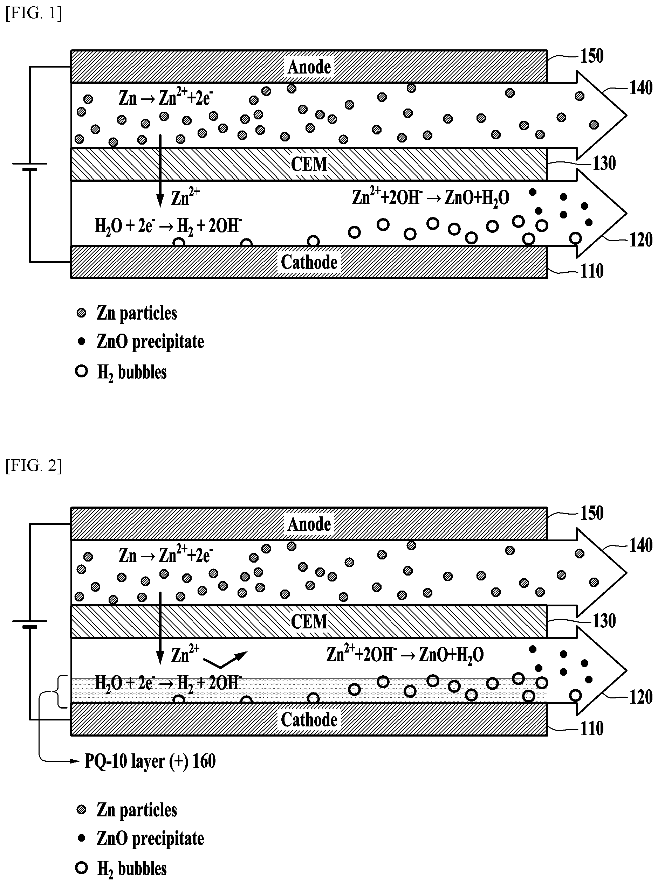

FIG. 1 is a schematic diagram illustrating an alkaline water electrolysis device according to one embodiment of the present invention, and FIG. 2 is a schematic diagram illustrating an alkaline water electrolysis device including a cationic polyelectrolyte layer according to one embodiment of the present invention.

The alkaline water electrolysis device according to one embodiment of the present invention includes a cathode 110, a first fluid channel 120 formed on the cathode 110, a cation exchange membrane (CEM) 130 formed on the first fluid channel 120, a second fluid channel 140 formed on the cation exchange membrane 130, and an anode 150 formed on the second fluid channel 140.

To overcome the limitations of existing technologies, the alkaline water electrolysis device according to one embodiment of the present invention is an ultra-low-power cation exchange membrane alkaline water electrolysis device using the oxidation reaction of metal particles, and is electrolysis technology that induces the oxidation reaction of metal particles into metal ions in the second fluid channel 140 on the anode 150 and causes water decomposition reaction in the first fluid channel 120 on the cathode 110 to produce hydrogen gas.

At this time, the driving voltage of the alkaline water electrolysis device actually used may be reduced by the standard reduction potential of the metal particles that are spontaneously oxidized, so the alkaline water electrolysis device using the oxidation reaction of the metal particles may produce hydrogen with much lower power than the existing method. In addition, additional value may be created by producing high value-added metal oxides (e.g., zinc oxide) that may be used in various industries.

In addition, the alkaline water electrolysis device according to one embodiment of the present invention may significantly improve safety by replacing the oxygen generation reaction, which requires an expensive catalyst and causes the problem of hydrogen-oxygen mixture explosion, with a metal oxidation reaction.

Hereinafter, each component will be described in more detail..

First, the alkaline water electrolysis device according to one embodiment of the present invention includes the cathode 110.

The cathode 110 may include at least one of gold (Au), silver (Ag), platinum (Pt), iridium (Ir), titanium (Ti), ruthenium (Ru), copper (Cu), Ti-Ru/Ir mesh coated on titanium (Ti)-ruthenium (Ru) alloy, platinum (Pt) mesh, titanium-ruthenium alloy Ti/Ru, indium tin oxide (ITO), stainless steel, and graphite (carbon or graphite fiber).

The alkaline water electrolysis device according to one embodiment of the present invention includes the first fluid channel 120 formed on the cathode 110.

The first fluid channel 120 may include a cathode electrolyte.

The cathode electrolyte may include at least one of potassium ferricyanide (K₃Fe(CN)₆), sodium chloride (NaCl), sodium sulfate (Na₂SO₄), hydrochloric acid (HCl), sodium sulfate (Na₂SO₄), iron (III) chloride (FeCl₃), sodium chloride (NaCl) and potassium hydroxide (KOH), ammonium hydrogen carbonate (NH₄HCO₃), potassium carbonate (K₂CO₃), sodium hydroxide (NaOH), sodium carbonate (Na₂CO₃), and ultrapure water.

The cathode electrolyte may be in the form of a solution.

The alkaline water electrolysis device according to one embodiment of the present invention includes the cation exchange membrane (CEM) 130 formed on the first fluid channel 120.

The cation exchange membrane 130 is a synthetic resin membrane that selectively allows cations to pass therethrough. The cation exchange membrane 130 has a negative charge, so anions are repelled and have difficulty passing through the cation exchange membrane 130, and only cations may pass through the cation exchange membrane 130.

Accordingly, the alkaline water electrolysis device according to one embodiment of the present invention may include the cation exchange membrane 130, and thus may selectively permeate metal ions (cations) included in the second fluid channel 140 into the first fluid channel 120. Accordingly, in the alkaline water electrolysis device according to one embodiment of the present invention, metal ions (cations) may be used as charge transfer ions.

The cation exchange membrane 130 may include an organic film, preferably at least one of polystyrene, polyimide, polyester, polyether, polyethylene, polytetrafluoroethylene, polymethyl ammonium chloride, and polyglycidyl methacrylate, without being limited thereto.

The alkaline water electrolysis device according to one embodiment of the present invention includes the second fluid channel 140 formed on the cation exchange membrane 130.

The second fluid channel 140 may include metal particles, and may be used as a metal particle fluidic electrode.

An oxidation reaction occurs at the electrode (at least one of the anode and cathode) used in the alkaline water electrolysis device according to one embodiment of the present invention. When a material with redox potential is used as a general solid electrode, the problem of the electrode being consumed due to continuous oxidation reaction may occur. The consumed electrode (at least one of the anode and cathode) must be replaced, making continuous water electrolysis impossible.

However, compared to conventional electrodes, which cannot be replaced while the system is running, the alkaline water electrolysis device according to one embodiment of the present invention uses a metal particle fluidic electrode, so that particles may be injected into the fluid channel (at least one of the first and second fluid channels) together with an electrolyte while the system is operating, and may be consumed by causing an oxidation reaction in the fluid channel instead of the electrode.

Accordingly, the phenomenon of electrode (i.e., at least one of the anode and cathode) being consumed may be overcome by replacing the electrode where a redox potential exists with particles containing a substance corresponding to the electrode, thereby making continuous water electrolysis possible.

In addition, the metal particles may be mixed with an electrolyte and injected into the cell through the fluid channel (at least one of the first and second fluid channels). Since the metal particles are evenly distributed within the fluid channel (at least one of the first and second fluid channels), and each metal particle replaces the electrode (at least one of the anode and cathode), the problem of increased maintenance costs due to consumption and replacement of the electrode (at least one of the anode and cathode) may be solved, and the efficiency of the system and water electrolysis capacity may be improved through an increase in the effective area where oxidation reaction occurs.

In addition, when a battery using the oxidation potential of the metal anode 150 is used for water electrolysis to obtain a power reduction effect, the alkaline water electrolysis device according to one embodiment of the present invention may continuously supply the anode material 150 using a metal particle fluidic electrode.

Accordingly, when a voltage is applied perpendicularly to the cation exchange membrane 130, the metal particles in the second fluid channel 140 are oxidized to generate metal ions, while simultaneously controlling the potential difference of the alkaline water electrolysis device.

Specifically, in the alkaline water electrolysis device according to one embodiment of the present invention, since the hydrogen production channel (the first fluid channel 120) and the metal particle fluidic electrode (the second fluid channel 140) are separated by the cation exchange membrane 130 having ion selectivity, When the metal particles in the second fluid channel 140 on the anode 150 are oxidized into metal ions, a standard reduction potential of -0.76 V is generated. By using this reaction, the potential difference required for electrolysis may be lowered, resulting in an advantage in the cost of hydrogen production.

Accordingly, by replacing a reaction occurring on the anode 150 side with a metal oxidation reaction instead of an oxygen generation reaction, there is no need to use an expensive catalyst required for the oxygen generation reaction, and the risk of hydrogen-oxygen mixture gas explosion due to oxygen generation may be eliminated.

In addition, metal ions generated in the second fluid channel 140 on the anode 150 side and hydroxyl ions generated in the first fluid channel 120 on the cathode 110 side move through the cation exchange membrane in the water electrolysis process and are synthesized into at least one of a metal hydroxide and a metal oxide. Accordingly, a large portion of the cost of hydrogen production may be recovered through metal oxide (e.g., zinc oxide), which is a high value-added product with a higher price than metal (e.g., zinc).

The potential difference required for electrolysis of the alkaline water electrolysis device according to one embodiment of the present invention may be approximately -0.36 V (low calorific value). When the potential difference is less than -0.36 V, water decomposition may not occur.

The metal particles may include at least one of zinc (Zn), lead (Pb), cadmium (Cd), iron (Fe), magnesium (Mg), and aluminum (Al), preferably zinc (Zn). Zinc is a material with a high oxidation potential of +0.76 V, and has the advantages of being inexpensive and non-flammable compared to other metals.

For example, in the alkaline water electrolysis device according to one embodiment of the present invention, by using the cation exchange membrane 130 as a separation membrane and zinc ions as charge transfer ions, zinc ions oxidized in the second fluid channel (e.g., zinc particle fluid channel) on the anode 150 side may move to the cathode 110 side through the cation exchange membrane 130 and meet with hydroxide ions generated through the hydrogen generation reaction on the cathode 110 side to generate zinc oxide.

In addition, when using hydroxide ions as charge transfer ions, as zinc oxide is generated, a film is formed surrounding the zinc particles, which may hinder the oxidation reaction of zinc. In addition, work may be performed to separate the product zinc oxide from the zinc particles. In the alkaline water electrolysis device according to one embodiment of the present invention, by using zinc particles, which are metal particles, as charge transfer ions, the zinc oxide generation channel moves toward the cathode 110. As a result, the oxidation reaction of zinc may be prevented from being hindered by the film formed around the zinc particles by the generated zinc oxide, and the work of separating the product zinc oxide from the zinc particles may be omitted.

In addition, in the alkaline water electrolysis device according to one embodiment of the present invention, the electron transfer ability may be controlled depending on the concentration of the metal particles contained in the second fluid channel 140. Specifically, as the concentration of the metal particles included in the second fluid channel 140 increases, electrons may be effectively transferred from the electrode to the metal particles, and the efficiency of the redox reaction may be increased.

For example, the concentration of the metal particles contained in the second fluid channel 140 may be 1 wt% to 20 wt%. When the concentration of the metal particles is less than 1 wt%, a problem of discontinuous contact between the metal particles and the electrode may occur. When the concentration of the metal particles exceeds 20 wt%, a problem of the metal particles not being able to flow in the second fluid channel 140 occurs.

According to embodiments, the metal particles may be metal nanoparticles.

In addition, the second fluid channel 140 may include an anode electrolyte.

The anode electrolyte may include at least one of sodium acetate (CH₃COONa) + phosphate, phosphate-buffered saline (PBS), ammonium chloride (NH₄Cl), monosodium phosphate (NaH₂PO₄), potassium ferrocyanide (K₄Fe(CN)₆), sodium sulfate (Na₂SO₄), hydrogen ammonium carbonate (NH₄HCO₃), sodium hydroxide (NaOH), sodium chloride (NaCl), iron (II) chloride (FeCl₂), sulfuric acid (H₂SO₄), sodium chloride (NaCl), and potassium hydroxide (KOH), without being limited thereto.

The form of the anode electrolyte may be a solution.

The alkaline water electrolysis device according to one embodiment of the present invention includes the anode 150 formed on the second fluid channel 140.

The anode 150 may include at least one of gold (Au), silver (Ag), platinum (Pt), iridium (Ir), aluminum (Al), titanium (Ti), ruthenium (Ru), titanium (Ti)-ruthenium (Ru) alloy coated with Ti-Ru/Ir mesh, platinum (Pt) mesh, titanium-ruthenium alloy Ti/Ru, and indium tin oxide (ITO). In addition, the anode 150 may include at least one of chromium (Cr) used in titanium V4A steel, nickel (Ni), molybdenum (Mo), chromium (Cr) used as stainless steel, and iron (Fe).

According to the water electrolysis mechanism using the alkaline water electrolysis device according to one embodiment of the present invention, first, when a voltage is applied vertically to the cation exchange membrane 130, the metal particles in the second fluid channel 140 may be oxidized to generate metal ions, and at the same time, the potential difference of the alkaline water electrolysis device may be controlled using the standard reduction potential of the metal particles.

Then, the metal ions generated in the second fluid channel 140 may move to the first fluid channel 120 along the direction of an electric field, and at the same time, water may be decomposed into hydrogen and hydroxyl ions in the first fluid channel 120, and the generated hydroxyl ions may react with the metal ions to generate at least one of a metal hydroxide and a metal oxide.

At this time, the alkaline water electrolysis device according to one embodiment of the present invention may convert the metal hydroxide into the metal oxide within the first fluid channel 120 by controlling operating temperature.

The operating temperature may be 20 °C to 100 °C. When the operating temperature is less than 20 °C, the Gibbs free energy required for water decomposition increases, which causes a problem in that the minimum voltage required increases accordingly. When the operating temperature exceeds 100 °C, although increased ionic conductivity may increase water electrolysis performance, this raises the problem of requiring more heat energy to increase the temperature. **In** addition, there is a problem that water as a liquid electrolyte inside the water electrolysis device evaporates and the ion exchange membrane inside the device is damaged by heat, reducing lifespan thereof.

For example, when zinc particles are used as the metal particles, the alkaline water electrolysis device according to one embodiment of the present invention is an alkaline water electrolysis device based on a zinc oxidation reaction, which may be composed of the anode 150 where zinc is oxidized, the cathode 110 where hydrogen is generated, and the cation exchange membrane 130 that physically separates the two electrodes and the electrolyte therebetween.

At this time, when a voltage is applied vertically to the cation exchange membrane 130, zinc is spontaneously oxidized on the anode 150 side, and the potential difference required for water decomposition may be reduced by the standard reduction potential of the reaction, and zinc ions pass through the cation exchange membrane 130 and move toward the cathode 110, and at the same time, water is decomposed into hydrogen and hydroxyl ions on the cathode 110 side, generating hydrogen, and the generated hydroxyl ions may meet with zinc ions to synthesize zinc hydroxide.

At this time, the reaction of water in the first fluid channel 120 is as shown in Chemical Formula 1 below, and the reaction of zinc particles in the second fluid channel 140 is as shown in Chemical Formula 2 below.

[Chemical Formula 1] H₂O + 2e⁻ → H₂↑ + 2OH⁻ (E0 = - 0.83V vs. SHE)

[Chemical Formula 2] Zn → Zn²⁺ + 2e⁻ (E0 = 0.76V vs. SHE)

In addition, by controlling the temperature within the operating temperature range, the product may be converted from zinc hydroxide to zinc oxide particles (e.g., zinc oxide nanoparticles), and the generated zinc oxide is a high value-added product that is more expensive than zinc and is an advanced material used in the rubber, ceramic, pharmaceutical, and cosmetic industries.

Accordingly, in the alkaline water electrolysis device according to one embodiment of the present invention, by adding an electrode material to the second fluid channel 140 and allowing the electrode to flow in the second fluid channel 140, the voltage required for operation may be reduced by the chemical energy released through oxidation of zinc, and at the same time, zinc ions are transferred through the cation exchange membrane 130 so that zinc hydroxide/zinc oxide may be synthesized within the cathode electrolyte.

According to an embodiment, the alkaline water electrolysis device according to one embodiment of the present invention may further include a cationic polyelectrolyte layer 160 at the interface between the cathode 110 and the first fluid channel 120.

Specifically, by adding the cationic polyelectrolyte layer 160 to a hydrogen generation channel on the cathode 110 side, since the cationic polyelectrolyte with a positive charge (+) has a property of moving in the direction of the electric field, the cationic polyelectrolyte is attracted to the cathode 110, and a film formed of a polymer electrolyte may be formed on the surface of the cathode 110.

Since the formed cationic polyelectrolyte layer 160 has a positive charge, the cationic polyelectrolyte layer 160 repels cations and allows anions to pass therethrough due to electrostatic properties. Accordingly, zinc ions that pass through the cation exchange membrane 130 and enter the first fluid channel 120 on the cathode 110 are prevented from being reduced on the cathode 110 and forming metal dendrite, and hydroxide ions generated through hydrogen generation reaction are allowed to pass, thereby separating the part where hydrogen is generated and the part where zinc oxide is synthesized.

In addition, since a polymer electrolyte (preferably, an aqueous polyelectrolyte solution) exists in the form of a polymer chain that carries a charge in an aqueous solution, the polymer electrolyte contains a large amount of water and therefore does not cause problems in supplying water required for the hydrogen generation reaction. In addition, since the polymer electrolyte is a charged polymer, the polymer electrolyte may also have the effect of increasing the conductivity of electrolytes, that is, lowering resistance.

The cationic polyelectrolyte layer 160 may control the reaction by separating hydrogen and zinc hydroxide/zinc oxide produced by using the cationic polyelectrolyte layer 160 as a cathode electrolyte. The cationic polyelectrolyte is positively charged, so when voltage is applied, the cationic polyelectrolyte moves toward the cathode due to a generated electric field and is adsorbed on the electrode. The cationic polyelectrolyte surrounding the cathode 110 may inhibit the formation of dendrites by blocking the movement of zinc ions in the first fluid channel 120 to the cathode 110.

The cationic polyelectrolyte layer 160 may further include at least one of PQ-10, protonated polyethyleneimine (PEI), protonated poly(allylamine) (PAH), and polydiallyldimethylammonium chloride (PDADMAC).

The ultra-low-power alkaline water electrolysis device using metal oxidation reaction (e.g., zinc oxidation reaction) according to one embodiment of the present invention may be used not only for water electrolysis but also for fuel cells to improve performance and increase energy efficiency, thereby responding to the increasing demand for hydrogen.

In addition, the alkaline water electrolysis device may secure cost advantages in line with the growing zinc oxide market through high value-added zinc oxide synthesized as a process progresses, not limited to simply improving the performance/energy efficiency of an alkaline water electrolysis device.

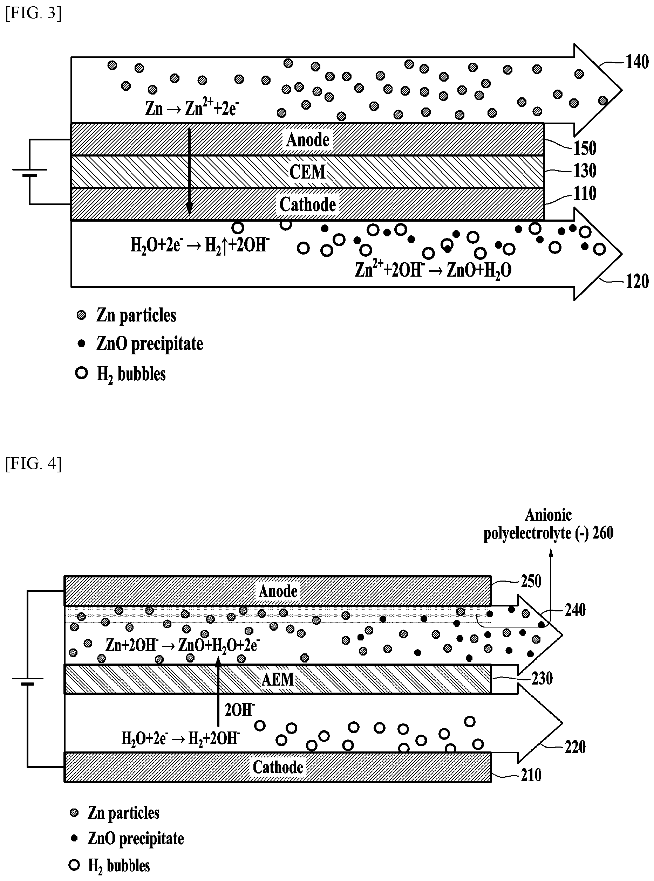

FIG. 3 is a schematic diagram illustrating an alkaline water electrolysis device having a zero-gap structure according to an embodiment of the present invention.

The alkaline water electrolysis device having a zero-gap according to an embodiment of the present invention includes a first fluid channel 120, a cathode 110 formed on the first fluid channel 120, a cation exchange membrane 130 formed on the cathode 110, an anode 150 formed on the cation exchange membrane 130, and a second fluid channel 140 formed on the anode 150. The second fluid channel 140 includes metal particles, and is used as a metal particle fluidic electrode.

Liquid electrolytes have relatively greater resistance to ion transport than solid polymer ion exchange membranes. As the length of the liquid electrolyte channel increases in the direction of the ion migration path, the resistance increases. Also, as the length decreases, the resistance decreases. The zero-gap structure is one in which the liquid electrolyte channel is excluded from the ion migration path to minimize the resistance.

Accordingly, the alkaline water electrolysis device having a zero-gap according to an embodiment of the present invention has a form in which the anode 150 and the cation exchange membrane 130 are attached. Accordingly, the first fluid channel 120 and the second fluid channel 140, which have high resistance between the anode 150 and the cathode 110 and the cation exchange membrane 130, are excluded from the zinc ion migration path, and are positioned outside the anode and cathode, thereby minimizing the resistance between the anode 150 and the cathode 110.

Accordingly, in the zero-gap structure, even when the same voltage is applied, the resistance acts small and a high current flows, and the amount of hydrogen generated increases in proportion to a current value. In addition, hydrogen bubbles generated within the liquid electrolyte between the anode 150 and the cathode 110 in FIG. 1 may act as resistance in the water electrolysis device. In the case of FIG. 3, since hydrogen bubbles are generated outside the zinc ion migration path rather than within the zinc ion migration path from the anode to the cathode, the problem of increased electrical resistance due to bubbles during the hydrogen production process may also be solved, and thus the effect of increasing the amount of hydrogen produced may be obtained.

FIG. 4 is a schematic diagram illustrating an alkaline water electrolysis device according to another embodiment of the present invention.

The alkaline water electrolysis device according to another embodiment of the present invention uses an anion exchange membrane 230 and may include the same components as the alkaline water electrolysis device according to an embodiment of the present invention, except that hydroxyl ions are used as charge transfer ions. Therefore, a description of the same components will be omitted.

The alkaline water electrolysis device according to another embodiment of the present invention includes a cathode 210, a first fluid channel 220 formed on the cathode 210, the anion exchange membrane (AEM) 230 formed on the first fluid channel 220, a second fluid channel 240 formed on the anion exchange membrane 230, and an anode 250 formed on the second fluid channel 240. The second fluid channel 240 includes metal particles, and is used as a metal particle fluidic electrode.

The alkaline water electrolysis device according to another embodiment of the present invention includes the anion exchange membrane 230 formed on the first fluid channel 220.

The anion exchange membrane 230 is a synthetic resin membrane that selectively allows anions to pass therethrough. The anion exchange membrane 230 has a positive charge, so cations are repelled and have difficulty passing therethrough, and only anions may pass therethrough.

Accordingly, the alkaline water electrolysis device according to another embodiment of the present invention includes the anion exchange membrane 230, which may selectively allow hydroxyl ions (anions) contained in the first fluid channel 220 to pass into the second fluid channel 240. Accordingly, in the alkaline water electrolysis device according to another embodiment of the present invention, hydroxyl ions (anions) may be used as charge transfer ions.

The anion exchange membrane 230 may include at least one of Fumasep FAA3 from Fumatech, A201 from Tokuyama, AEMION from Ionomr, Sustainion from Dioxide Material, Durion TM1 from Orion Polymer, AMHPP from Ralex, and AMHPES from Ralex.

In the alkaline water electrolysis device according to another embodiment of the present invention, when a voltage is applied vertically to the anion exchange membrane 230, the metal particles in the second fluid channel 240 are oxidized to generate metal ions, and at the same time, the potential difference of the alkaline water electrolysis device may be controlled.

At the same time, water is decomposed into hydrogen and hydroxyl ions in the first fluid channel 220, and the generated hydroxyl ions may move to the second fluid channel 240 along the direction of the electric field.

Accordingly, in the second fluid channel 240, hydroxyl ions may react with metal ions to produce at least one of a metal hydroxide and a metal oxide.

At this time, the alkaline water electrolysis device according to another embodiment of the present invention may convert the metal hydroxide into the metal oxide within the second fluid channel 240 by controlling operating temperature.

The operating temperature may be 20 °C to 100 °C. When the operating temperature is less than 20 °C, the Gibbs free energy required for water decomposition increases, which causes a problem in that the minimum voltage required increases accordingly. When the operating temperature exceeds 100 °C, although increased ionic conductivity may increase water electrolysis performance, this raises the problem of requiring more heat energy to increase the temperature. In addition, there is a problem that water as a liquid electrolyte inside the water electrolysis device evaporates and the ion exchange membrane inside the device is damaged by heat, reducing lifespan thereof.

In the alkaline water electrolysis device according to another embodiment of the present invention, unlike the alkaline water electrolysis device according to one embodiment of the present invention, hydroxide ions are used as charge transfer ions. Hydroxide ions have significantly higher ion mobility than zinc ions, which are charge transfer ions of the alkaline water electrolysis device according to one embodiment of the present invention. Additionally, the ion transport resistance of the first fluid channel 220, the second fluid channel 240, and the anion exchange membrane 230 is significantly low. Accordingly, when the same voltage is applied, current flow increases, and the amount of hydrogen generated may increase accordingly.

According to an embodiment, the alkaline water electrolysis device according to another embodiment of the present invention may further include an anionic polyelectrolyte layer 260 at the interface between the second fluid channel 240 and the anode 250.

In the alkaline water electrolysis device according to another embodiment of the present invention, the anion exchange membrane 230 is used. Thus, when hydroxyl ions are used as charge transfer ions, by forming the anionic polyelectrolyte layer 260 using an aqueous anionic polyelectrolyte solution that moves toward the anode 250 along an electric field to prevent precipitate generated at the anode 250, fouling generated at the electrode may be prevented.

### [Manufacturing Example 1] : Alkaline water electrolysis device according to one embodiment of the present invention (FIG. 1)

The alkaline water electrolysis device consists of an anode (carbon); a second fluid channel (ZnSO₄ 0.5 M) containing zinc particles; a cation exchange membrane; a first fluid channel (NaOH 0.5 M); and a cathode (carbon). An electrolyte was injected into the first fluid channel and the second fluid channel at a flow rate of 10 µL/min, and bubble generation was observed when a voltage of 2 V was applied. The open circuit voltage (OCV) is a voltage measured under a current condition of 0 A before applying a voltage for a bubble generation experiment, and indicates the degree of voltage gain obtained from the zinc oxidation reaction when a voltage is applied.

### [Manufacturing Example 2]: Alkaline water electrolysis device including a cationic polyelectrolyte layer according to one embodiment of the present invention (FIG. 2)

The alkaline water electrolysis device consists of an anode (carbon); a second fluid channel (ZnSO₄ 0.5 M) including zinc particles; a cation exchange membrane; a first fluid channel (NaOH 0.5M + cationic polyelectrolyte) including a cationic polyelectrolyte; and a cathode (carbon). The cationic solid polyelectrolyte used is 1 wt% of polyquaternium-10 (pq-10). An electrolyte was injected into the first fluid channel and the second fluid channel at a flow rate of 10 µL/min, and bubble generation was observed when a voltage of 2 V was applied. The open circuit voltage (OCV) is a voltage measured under a current condition of 0 A before applying a voltage for a bubble generation experiment, and indicates the degree of voltage gain obtained from the zinc oxidation reaction when a voltage is applied.

### [Manufacturing Example 3]: Alkaline water electrolysis device having a zero-gap according to an embodiment of the present invention (FIG. 3)

The alkaline water electrolysis device was manufactured in the same manner as in Manufacturing Example 1, except that the alkaline water electrolysis device consists of a second fluid channel; an anode (carbon); a cation exchange membrane; a cathode (carbon); and a first fluid channel.

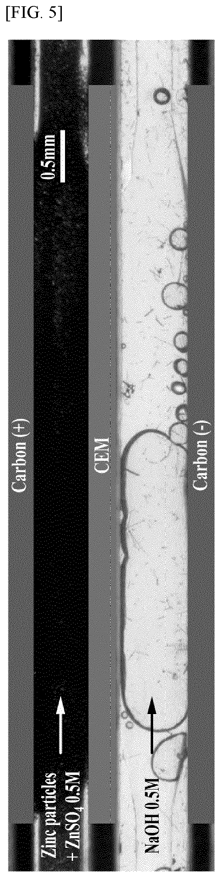

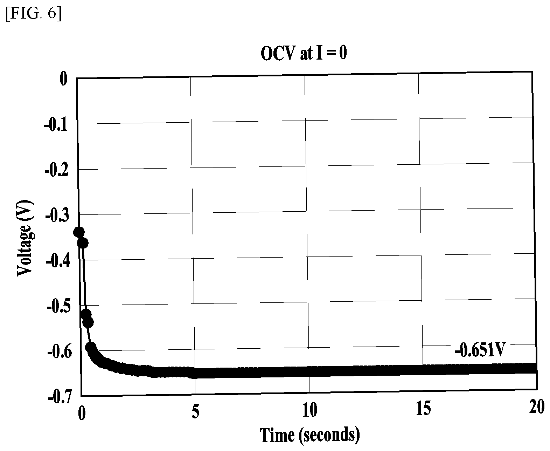

FIG. 5 is a microscope image illustrating an alkaline water electrolysis device according to an embodiment of the present invention, and FIG. 6 is a graph showing the results of measuring the open circuit voltage of an alkaline water electrolysis device according to an embodiment of the present invention.

Referring to FIG. 5, 0.5 M NaOH was used in the first fluid channel. It can be seen that hydrogen bubbles are generated in the cathode side channel.

In addition, referring to FIG. 6, it can be seen that the alkaline water electrolysis device according to one embodiment of the present invention achieves a voltage gain of 0.651 V during operation.

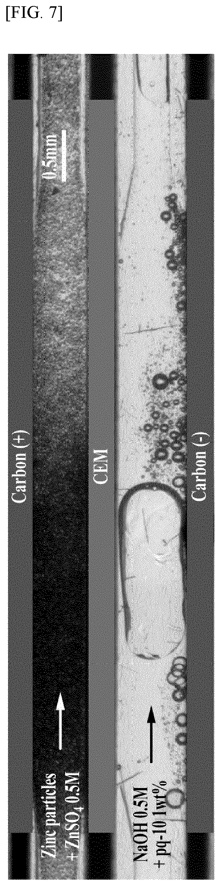

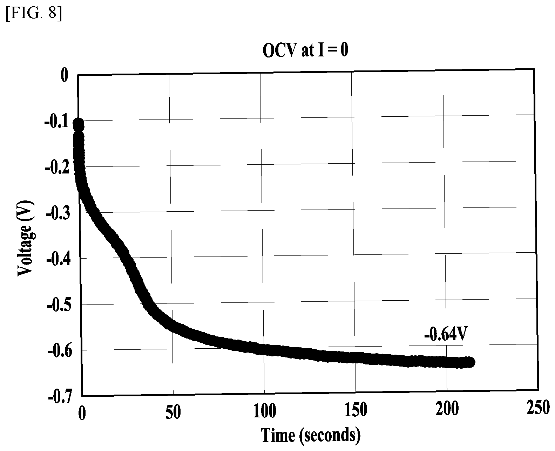

FIG. 7 is a microscope image of an alkaline water electrolysis device including a cationic polyelectrolyte layer according to an embodiment of the present invention, and FIG. 8 is a graph showing the results of measuring the open circuit voltage of an alkaline water electrolysis device including a cationic polyelectrolyte layer according to an embodiment of the present invention.

Referring to FIG. 7, 0.5 M NaOH and 1 wt% of pq-10 as the cationic polyelectrolyte were used in the first fluid channel. It can be seen that hydrogen bubbles are generated in the cathode side channel.

Referring to FIG. 8, it can be seen that the alkaline water electrolysis device including a cationic polyelectrolyte layer according to one embodiment of the present invention achieves a voltage gain of 0.64 V during operation.

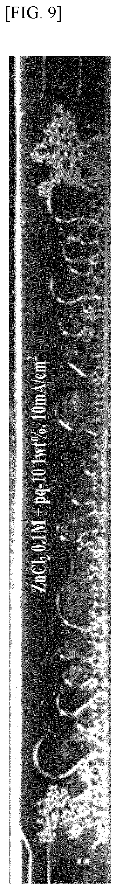

FIG. 9 is a microscope image of a first fluid channel including a cationic polyelectrolyte layer in an alkaline water electrolysis device including a cationic polyelectrolyte layer according to one embodiment of the present invention.

Referring to FIG. 9, in a device with an actual zinc-zinc symmetric structure, it can be confirmed that zinc ions do not move to the cathode and are not reduced due to the cationic polymer electrolyte (PQ-10) layer generated on the cathode side, and only the hydrogen generation reaction occurs.

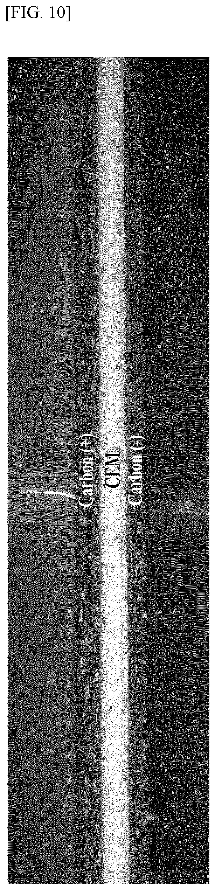

FIG. 10 is a microscope image of an alkaline water electrolysis device having a zero-gap structure according to an embodiment of the present invention.

Referring to FIG. 10, it can be seen that the alkaline water electrolysis device having a zero-gap according to an embodiment of the present invention is well manufactured.

Meanwhile, embodiments of the present invention disclosed in the present specification and drawings are only provided to aid in understanding of the present invention and the present invention is not limited to the embodiments. It will be apparent to those skilled in the art that various modifications can be made to the above-described exemplary embodiments of the present invention without departing from the spirit and scope of the invention.

## Claims

1. An alkaline water electrolysis device, comprising:
a cathode;
a first fluid channel formed on the cathode;
a cation exchange membrane (CEM) formed on the first fluid channel;
a second fluid channel formed on the cation exchange membrane; and
an anode formed on the second fluid channel,
wherein the second fluid channel comprises metal particles and is used as a metal particle fluidic electrode.

2. The alkaline water electrolysis device according to claim 1, wherein, when a voltage is applied perpendicularly to the cation exchange membrane, in the second fluid channel, the metal particles are oxidized to generate metal ions, and at the same time, a potential difference of the alkaline water electrolysis device is controlled using a standard reduction potential of the metal particles.

3. The alkaline water electrolysis device according to claim 2, wherein the metal ions generated in the second fluid channel move to the first fluid channel along a direction of an electric field.

4. The alkaline water electrolysis device according to claim 3, wherein, in the first fluid channel, water is decomposed into hydrogen and hydroxyl ions, and the generated hydroxyl ions react with the metal ions to produce at least one of a metal hydroxide and a metal oxide.

5. The alkaline water electrolysis device according to claim 4, wherein the alkaline water electrolysis device converts the metal hydroxide into the metal oxide within the first fluid channel by controlling operating temperature.

6. The alkaline water electrolysis device according to claim 5, wherein the operating temperature is 20 °C to 100 °C.

7. The alkaline water electrolysis device according to claim 1, wherein the metal particles comprise at least one of zinc (Zn), lead (Pb), cadmium (Cd), iron (Fe), magnesium (Mg), and aluminum (Al).

8. The alkaline water electrolysis device according to claim 1, wherein the alkaline water electrolysis device further comprises a cationic polyelectrolyte layer at an interface between the cathode and the first fluid channel.

9. An alkaline water electrolysis device having a zero-gap, comprising:
a first fluid channel;
a cathode formed on the first fluid channel;
a cation exchange membrane formed on the cathode;
an anode formed on the cation exchange membrane; and
a second fluid channel formed on the anode,
wherein the second fluid channel comprises metal particles and is used as a metal particle fluidic electrode.

10. An alkaline water electrolysis device, comprising:
a cathode;
a first fluid channel formed on the cathode;
an anion exchange membrane (AEM) formed on the first fluid channel;
a second fluid channel formed on the anion exchange membrane; and
an anode formed on the second fluid channel,
wherein the second fluid channel comprises metal particles and is used as a metal particle fluidic electrode.

11. The alkaline water electrolysis device according to claim 10, wherein, when a voltage is applied perpendicularly to the anion exchange membrane, in the second fluid channel, the metal particles are oxidized to generate metal ions, and at the same time, a potential difference of the alkaline water electrolysis device is controlled using a standard reduction potential of the metal particles.

12. The alkaline water electrolysis device according to claim 11, wherein, in the first fluid channel, water is decomposed into hydrogen and hydroxyl ions, and the generated hydroxyl ions move to the second fluid channel along a direction of an electric field.

13. The alkaline water electrolysis device according to claim 12, wherein, in the second fluid channel, the hydroxyl ions react with the metal ions to produce at least one of a metal hydroxide and a metal oxide.

14. The alkaline water electrolysis device according to claim 13, wherein the alkaline water electrolysis device converts the metal hydroxide into the metal oxide within the second fluid channel by controlling operating temperature.

15. The alkaline water electrolysis device according to claim 14, wherein the operating temperature is 20 °C to 100 °C.

16. The alkaline water electrolysis device according to claim 10, wherein the alkaline water electrolysis device further comprises an anionic polyelectrolyte layer at an interface between the second fluid channel and the anode.
